(19) **Europäisches Patentamt**

**European Patent Office**

**Office européen des brevets**

(11) **EP 0 539 276 B1**

(12) **EUROPEAN PATENT SPECIFICATION**

(45) Date of publication and mention
of the grant of the patent:
**20.12.2000 Bulletin 2000/51**

(51) Int. Cl.$^7$: **G11B 20/10**, G11B 5/09

(21) Application number: **92402851.7**

(22) Date of filing: **16.10.1992**

(54) **Method for detecting digital data**

Verfahren zur Erkennung von digitalen Daten

Méthode de détection de données numériques

(84) Designated Contracting States:
**DE FR GB**

(30) Priority: **16.10.1991 JP 29638991**
**18.10.1991 JP 29966291**

(43) Date of publication of application:
**28.04.1993 Bulletin 1993/17**

(73) Proprietor: **SONY CORPORATION**
**Tokyo (JP)**

(72) Inventor:
**Hara, Masaaki,**
**c/o Sony Corporation**
**Shinagawa-ku, Tokyo (JP)**

(74) Representative:
**Thévenet, Jean-Bruno et al**
**Cabinet Beau de Loménie**
**158, rue de l'Université**
**75340 Paris Cédex 07 (FR)**

(56) References cited:
**EP-A- 0 180 971**        **US-A- 3 611 149**
**US-A- 4 759 036**

- **RECORD OF SUPERCOMM / ICC '90 vol. 2, no. 305, 15 April 1990, ATLANTA, GA, US pages 397 - 403 , XP000146099 J.H.WINTERS AND R.D. GITLIN 'Electrical signal processing techniques in long-haul , fiber-optic systems'**
- **ELECTRONICS LETTERS vol. 26, no. 1, 4 January 1990, STEVENAGE, HERTS., GB pages 13 - 15 , XP000105646 BERGMANS AND MITA 'Two new equalisation schemes for high density digital recording systems with quad-phase modulation code'**
- **KATO ET AL.: "An adaptive Equalizer for R-DAT", IEEE TRANSACTIONS ON CONSUMER ELECTRONICS, NEW YORK, August 1989, vol. 35, no. 3, pages 520 to 526**

**Description**

BACKGROUND OF THE INVENTION

Field of the Invention

This invention relates to a method for automatically adjusting characteristics of a reproduced signal processing apparatus in a digital recording and reproducing system or in a digital transmission system using a magnetic recording medium and, in particular, for automatically adjusting characteristics of a bit identifier for converting a reproduced signal into a digital signal.

Description of the Prior Art

In a digital recording and reproducing system or a digital transmission system, an increase in the recording density causes a decrease in S/N ratio of a signal reproduced from a magnetic recording medium (magnetic tape, magnetic disk and so on), and increases such errors so that the reproduced digital signal does not correspond to the recorded digital signal. There is the need for a signal processing technique for properly detecting a digital signal from an analog waveform from a reproducing head.

A known existing signal processing technique available for this purpose is an integral detecting method. This method executes equalization based on an equalizing standard, called the Nyquist standard, to minimize inter-symbol interference at an identified point and then binarizes the Nyquist waveform in view of the value relative to a predetermined threshold value.

With respect to characteristics of an equalizer for equalization referred to above, parameters are fixed after being adjusted by using a test signal so as to minimize code errors. Nevertheless, code errors increase with variations or changes with time in an electromagnetic converter system including tape and heads. When a scheme that sets parameters to optimum values by using a test signal is compared with a scheme that sets parameters automatically, there are slightly more errors in the automatic setting scheme. However, automatic adjustment of parameters copes with varieties of tape and heads or their changes with time. Taking this into consideration, automatic setting of parameters can reduce the error rate in the long-range view than the long-time use of the parameters manually set to minimize errors. Therefore, the equalizer is desired to be an automatic equalizer whose characteristics are adjusted automatically in accordance with a reproduced signal. There is the zero forcing algorithm as a procedure for realizing such an automatic equalizer. This procedure calculates equalization errors successively and reestablishes a tap coefficient of, for example, a transversal filter, in a direction for minimizing the errors.

Explained below is a case where the zero forcing algorithm is employed in a three-tap transversal filter. Output of the three-tap transversal filter is as follows:

$$X(k) = C(-1) \times Y(k-1) + C(0) \times Y(k) + C(1) \times Y(k+1)$$

where

| | |
|---|---|
| Y(k) | : amplitude of a reproduced signal of a kth bit before equalization |
| X(k) | : amplitude of the reproduced signal of the kth bit after equalization |
| C(0) | : coefficient for a current bit |
| C(-1) | : tap coefficient for a preceding bit |
| C(1) | : tap coefficient for a subsequent bit |

For automatic equalization, an equalization error and its estimation value are obtained. A signal E(k) corresponding to the equalization error is given by:

$$E(k) = (X(k) - T) - B(k)$$

where

| | |
|---|---|
| E(k) | : equalization error of the kth bit |
| B(k) | : expected amplitude value obtained from a result of detection of the kth bit |
| T | : threshold value for integral detection |

The equalization error estimation value H(j) is given by:

$$H(j) = \Sigma A(k - i) \times sgn(E(k))$$

where

$\Sigma$ : sum of (k = 0) to (k = N)

A(k) : result of identification of the kth bit (1 or -1)

$\alpha \geq 0$ : sgn($\alpha$) = 1

$\alpha < 0$ : sgn($\alpha$) = -1

An appropriate number N of occurrences of addition for obtaining the estimation value H(j) is related to the S/N of the reproduced signal.

In the three-tap transversal filter, the coefficient of the filter is increased or decreased by an infinitesimal value $\Delta$ in a direction for reducing inter-symbol interference in accordance with signs of three estimation values. That is, filter coefficients as a result of automatic equalization are:

$$C(-1) = C(-1) - \Delta \times sgn(H(-1))$$

$$C(0) = C(0) - \Delta \times sgn(H(0))$$

$$C(1) = C(1) - \Delta \times sgn(H(1))$$

This is the procedure of automatic equalization by a three-tap transversal filter using the zero forcing.

However, it is difficult to realize an equalizer fully satisfying the equalizing standard, and the existing method has such a problem that errors concentrate around the threshold value because of a random noise, low range shutoff, and high range shortage, and so on, with respect to the reproduced signal.

Digital signal reproducing apparatuses using integral detection have heretofore required an automatic equalizer having simple construction and capable of compensating variations and changes with time in characteristics of tape or heads. If a transversal filter is used, automatic equalizing algorithm can be used, and such an equalizer can be realized. However, sufficient equalization is not possible with a small number of taps. If the number of taps is increased, a resultant circuit is large-scaled. Therefore, no automatic equalizer has been available for practical use.

An example of an automatic equalizer which reduces the intersymbol interference in digital magnetic recording is disclosed in an article from Shinetsu Kato et al published in IEEE Transactions on Consumer Electronics, 35 (1989) No. 3, New York, pages 520-526 and entitled "An adaptive equalizer for R DAT".

OBJECTS AND SUMMARY OF THE INVENTION

It is therefore an object of the present invention to provide a method for automatically adjusting a bit identifier, which can be realized in the form of a simpler circuit arrangement than that of the existing method, ensures fast convergence immediately after the start of convergence or upon changes in status in which equalization errors are numerous, and decreases the variation after sufficient convergence.

According to an aspect of the invention, there is provided a method for automatically adjusting parameters of an automatic equalizer which equalizes a signal reproduced in accordance with said parameters, comprising the steps of estimating a value of equalization error and modifying said estimated value of equalization error so as to obtain a modified estimated value, wherein said step of modifying said estimated value of equalization error modifies said estimated value by adding to said estimated value a product of a polarity of an equalization error and an identification value identified on the basis of the equalized signal, characterized by the steps of: comparing an absolute value of said modified estimated value with a predetermined convergent coefficient; repeating said step of modifying when said absolute value of said modified estimated value is smaller than said convergent coefficient; varying one of said parameters of the automatic equalizer in accordance with a polarity of said modified estimated value when said absolute value of said modified estimated value is larger than said convergent coefficient, resetting said estimated value to zero before said estimated value is initially modified, and repeating said steps of resetting, modifying, comparing, repeating and varying for each one of said parameters of the automatic equalizer.

Immediately after the start of convergence or upon a change in status where equalization errors are numerous, parameters are reset in short intervals and are quickly converged. In contrast, after sufficient convergence where equalization errors are few, resetting intervals of the parameters are elongated. That is, while the step is held constant, the number of occurrences of addition N is varied with the amount of equalization errors.

The invention also relates to an automatic equalizer which equalizes a signal in accordance with parameters, as defined in claim 2.

The above, and other, objects, features and advantage of the present invention will become readily apparent from the following detailed description thereof which is to be read in connection with the accompanying drawings.

BRIEF DESCRIPTION OF THE DRAWINGS

Figs. 1A and 1B are schematic views showing converging characteristics of parameters by an existing automatic equalization;

Figs. 2A and 2B are schematic views showing converging characteristics of parameters by the existing automatic equalization;

Fig. 3 is a schematic view showing variation of parameters in the existing automatic equalization;

Fig. 4 is a flow chart showing processing by another example of the existing automatic equalization;

Figs. 5A and 5B are schematic views showing converging characteristics of parameters by another example of the existing automatic equalization;

Fig. 6 is a schematic view showing variation of parameters in another example of the existing automatic equalization;

Fig. 7 is a flow chart for explaining an embodiment of the invention.

Fig. 8 is a block diagram of the embodiment of the invention;

Figs. 9A and 9B are schematic views showing convergence of parameters in the embodiment of the invention; and

Fig. 10 is a schematic view showing variation of parameters in the embodiment of the invention.

DETAILED DESCRIPTION OF THE PREFERRED EMBODIMENTS

Previously, the present Applicant remarked the fact that it is possible to presume where errors may occur because of a random noise, low range shut-off, high range shortage and so forth, and proposed a system for adaptively controlling a threshold value of an integral detecting scheme (US Patent N° 5,313,472 filed June 4, 1992). This system executes the following general processing:

1) A reproduced signal after equalization (Nyquist waveform) is A/D-converted on the basis of a data rate, and a second-order difference value (ddX) is obtained by using a target bit and its preceding and subsequent bits. In addition, identification values of the preceding and subsequent bits $(A(k - 1), A'(k + 1))$ are obtained.

2) If the identification values of the preceding and subsequent bits are equal, one of the difference or the sum of a first second-order difference threshold value (S) and the second-order difference value (ddX) is selected in response to the identification value, and the selected difference or sum is multiplied by a first threshold corrective coefficient (Cs) and then added to a threshold value (T) for the integral detection.

3) If the identification values of the preceding and subsequent bits are different, one of the difference or sum of a second second-order difference threshold value (D) and the second-order difference value (ddX) is selected in response to the identification value of the preceding bit, and the selected difference or sum is then multiplied by a second threshold value corrective coefficient (Cd) and added to the predetermined threshold value (T). As a result, the threshold value can be moved in a direction for reducing affection by low range shut-off, high range shortage or bit shift and an error after identification can be reduced. Since the identification value $A'(k + 1)$ of the subsequent bit is obtained by using the threshold value (T) for the integral detection before an adaptive threshold value is obtained, it is a provisional identification value.

The adaptive threshold value detecting scheme detects an adaptive threshold value by varying the threshold value as follows:

In case of $A(k - 1) = A'(k + 1)$:

$$X(k) \geq T + Cs \times (ddX - A(k - 1) \times S) : A(k) = 1$$

$$X(k) < T + Cs \times (ddX - A(k - 1) \times S) : A(k) = -1$$

In case of $A(k - 1) \neq A'(k + 1)$:

$$X(k) \geq T + Cd \times (ddX - A(k - 1) \times D) : A(k) = 1$$

$$X(k) < T + Cd \times (ddX - A(k - 1) \times D) : A(k) = -1$$

where

| | |
|---|---|
| X(k) | : amplitude of the reproduced signal of the kth bit after equalization |
| A(k) | : identification value of the kth bit (1 or -1) |
| A′(k) | : provisional identification value of the kth bit (1 or -1) |
| T | : predetermined threshold value for integral detection |
| S | : second-order difference threshold value when identification values of preceding and subsequent bits are equal |
| D | : second-order difference threshold value when identification values of preceding and subsequent bits are different |
| Cs | : threshold value corrective coefficient when identification values of preceding and subsequent bits are equal |
| Cd | : threshold value corrective coefficient when identification values of preceding and subsequent bits are different |
| ddX | : second-order difference in bit intervals |

The second-order difference ddX is required for distinction between low range shut-off and high range shortage, and it is defined by:

$$ddX = X(k - 1) - 2 \times X(k) + X(k + 1)$$

The adaptive threshold value detecting scheme referred to above can be realized in the form of simple hardware including an A/D converter, a shift register, a circuit for detecting the second-order difference, a circuit for multiplying it by the corrective coefficient C, an adder or subtractor responsive to the identification value of the preceding bit for increasing or decreasing the threshold value T, and so on.

The present Applicant also proposed an automatic parameter adjusting system based on the foregoing adaptive threshold value detecting scheme and using the automatic equalization algorithm for a transversal filter referred to above. This system executes the processing outlined below.

1) It regards operation of the adaptive threshold value detecting scheme to be a transversal filter.
2) It preliminarily fixes the threshold value corrective coefficient by which the second-order difference of a bit interval has been multiplied before addition to the integral detective threshold value.
3) It introduces virtual gains in order to adapt automatic equalization algorithm of the transversal filter.
4) It calculates, at an adequate timing, an error estimating function required for automatic equalization algorithm.
5) It renews the second-order threshold value in accordance with an index obtained from similarity between the transversal filter and the adaptive threshold value detecting method.

As a result, a bit identifier is realized, which permits automatic adjustment of parameters without using a test signal, reduces the code error rate to 1/10, approximately, as compared to the integral detecting scheme, and compensates varieties of devices and media and their changes with time.

The equation used for detection by the foregoing adaptive threshold value detecting scheme, when changed into another form, may be regarded as a kind of transversal filter. The portion irrelevant to the identification values of the preceding and subsequent bits behaves as a transversal filter as follows:

$$Y(k) = X(k) - C \times ddX$$
$$= (1 + 2 \times C) \times X(k) - C \times X(k - 1) - C \times X(k +1)$$

Here the threshold value corrective coefficient C is fixed to C = 0.4 to 0.6 under the condition of X = Cs = Cd regardless of the input signal. Even by optimizing only the second-order difference values S and D while fixing the value of the corrective coefficient C, the effect of reducing the code error rate does not vary largely. For example, in order to reduce the number of parameters, the value of C may be fixed to C = 0.5. Then the portion irrelevant to the identification values of the preceding and subsequent bits behaves as a transversal filter having the following fixed coefficient:

$$Y(k) = 2 \times X(k) - X(k - 1)/2 - X(k + 1)/2$$

When introducing Gs and Gd as virtual gains and adding treatment of S and D, a nonlinear transversal filter having the following form is obtained, in which it is sufficient to identify 1 or -1 of the bit in view of the sign of Zs or Zd:
In case of A(k - 1) = A(k + 1):

$$Zs(k) = Gs \times (Y(k) - T - A(k - 1) \times S/2)$$

In case of $A(k - 1) \neq A(k + 1)$:

$$Zd(k) = Gd \times (Y(k) - T - A(k - 1) \times D/2)$$

Therefore, the automatic equalizing procedure by a three-tap transversal filter using the zero forcing method may be used in the adaptive threshold value detecting scheme referred to above. It is known by using the expressions of zs(k) and zd(k) that the signal E(k) corresponding to the equalization error and the estimation value H(j) of the equalization error are given by the same equations as those for the transversal filter. Here again, different bases are required for the case where the preceding and subsequent bits are equal and the case where they are different.

In case of $A(k - 1) = A(k + 1)$:

$$Es(k) = Zs(k) - B(k)$$

$$Hs(j) = \Sigma A(k - j) \times sgn(Es(k))$$

In case of $A(k - 1) \neq A(k + 1)$:

$$Ed(k) = Zd(k) - B(k)$$

$$Hd(j) = \Sigma A(k - j) \times sgn(Ed(k))$$

Estimation values are Hs(-1), Hs(0), Hs(1), Hd(-1), Hd(0) and Hd(1). In almost all the cases,

$$Hs(-1) = Hs(1)$$

$$Hd(-1) = Hd(1)$$

In addition, since the identification value $A(k -1)$ is more reliable than the identification value $A'(k + 1)$ provisionally identified by normal integral detection, it is sufficient to consider only four values, Hs(0), Hd(0), Hs(-1) and Hd(-1), as estimation values of equalization errors. How to increase or decrease the parameters in view of respective signs may be determined as follows:

Since gains Gs and Gd may be regarded as a substitute for C(0) of the transversal filter, they may be expressed by:

$$Gs = Gs - \Delta g \times sgn(Hs(0))$$

$$Gd = Gd - \Delta g \times sgn(Hd(0))$$

An increase of the second-order threshold values S and D corresponds to enhancement of low ranges while a decrease thereof corresponds to enhancement of high ranges. In a transversal filter, enhancement of low ranges increases C(-1) and C(1) simultaneously, and enhancement of high ranges decreases C(-1) and C(1) simultaneously. Therefore, if an increase of C(-1) and C(1) is desired, S and D may be increased. If a decrease is desired, S and D may be decreased. In conclusion, the parameters may be renewed under the following conditions:

$$S = S - \Delta t \times sgn(Hs(-1))$$

$$D = D - \Delta t \times sgn(Hd(-1))$$

Gs and S are independent from Gd and D, and can be adjusted independently.

In regard to the automatic equalization employed in the adaptive threshold value detecting scheme referred to above, converging characteristics of parameters with varieties of the number of occurrences of addition N are illustrated. These are results of simulation by a computer by introducing a digital VTR reproduced signal A/D-converted in eight bits. The automatic equalizer employs the adaptive threshold value detecting scheme after a linear equalizer, and automatically sets two parameters S and D, required for the detection, from the initial value 0 by using the zero forcing algorithm.

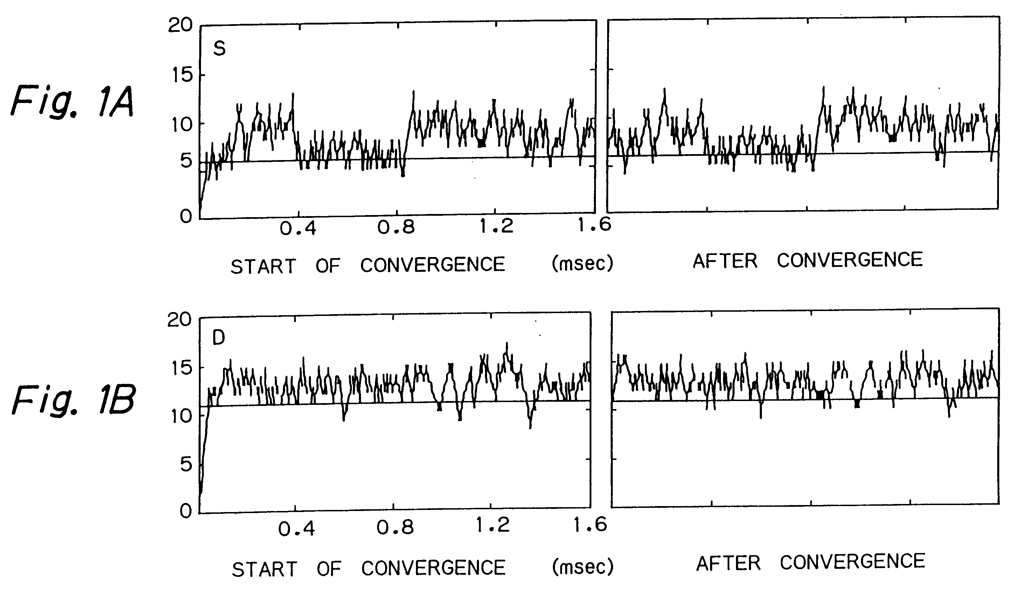

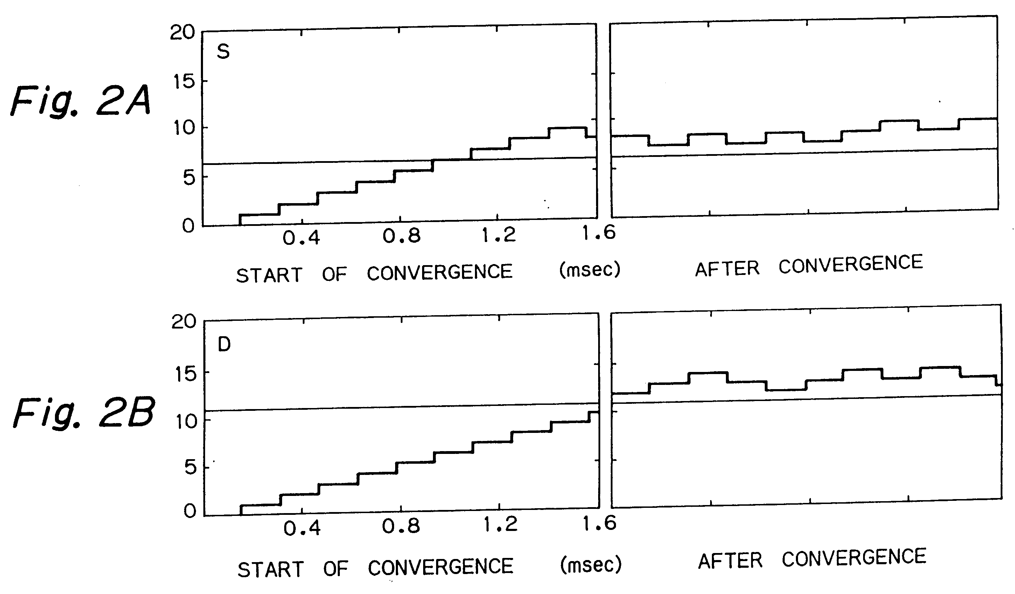

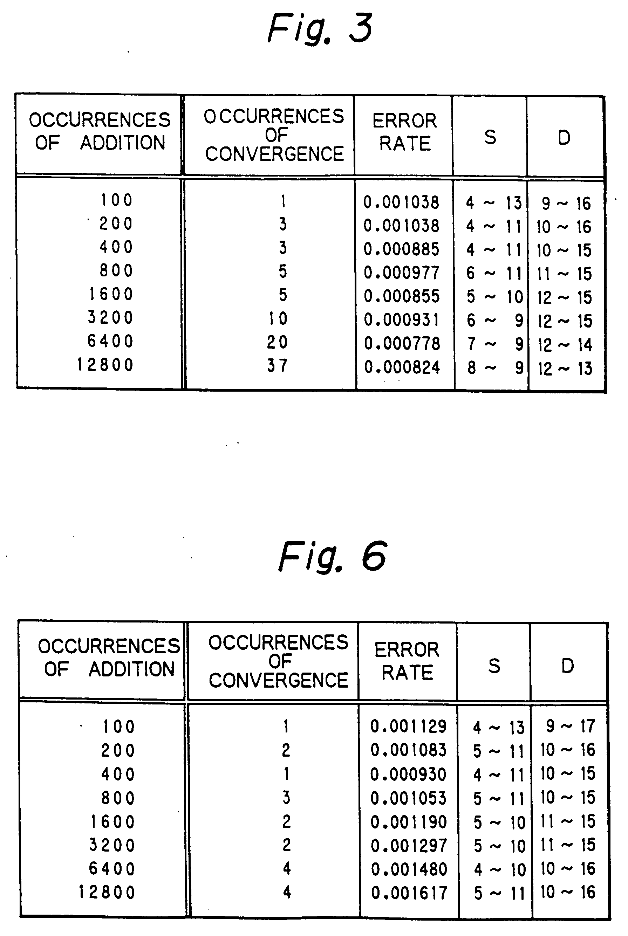

Fig. 1 shows a case where the number of occurrences of addition N is 100, while Fig. 2 shows a case where N = 6400. Further, results of cases where N is 100 to 12800 are shown in a table of Fig. 3. In Fig. 3, each numeral in the column "occurrences of convergence" is the number of occurrences of repetition at the time when results become constant or periodical after simulating the same data repeatedly by using a parameter resulting from preceding convergence as the initial value. Figs. 1 and 2 show values after reaching the said condition as converged values.

According to the results of the simulation, although parameters converge early under N = 100, variation after convergence is large, and code errors are numerous. Under N = 6400, although variation after convergence is small and code errors are less, long time is required for convergence.

In regard to convergence of parameters, it is desired that convergence occurs in a short time immediately after the start of convergence or upon changes in status in which equalization errors may often occur that variation is small after sufficient convergence, which would result in a decrease in code errors. In order to meet these requirements, a method of changing the width of an increase or decrease $\Delta$ in a nonlinear fashion in accordance with the magnitude of the estimation value of the equalization error H(j) is often used. For example, this is done as follows in accordance with, for example, the ratio between the estimation value H(j) and a convergence coefficient M (absolute value):

$$0 < [H(j)/M] < 1 \qquad : \Delta = 1$$
$$1 < [H(j)/M] < 2 \qquad : \Delta = 2$$
$$2 < [H(j)/M] < 4 \qquad : \Delta = 3$$
$$4 < [H(j)/M] < 8 \qquad : \Delta = 4$$
$$8 < [H(j)/M] \qquad\qquad : \Delta = 5$$

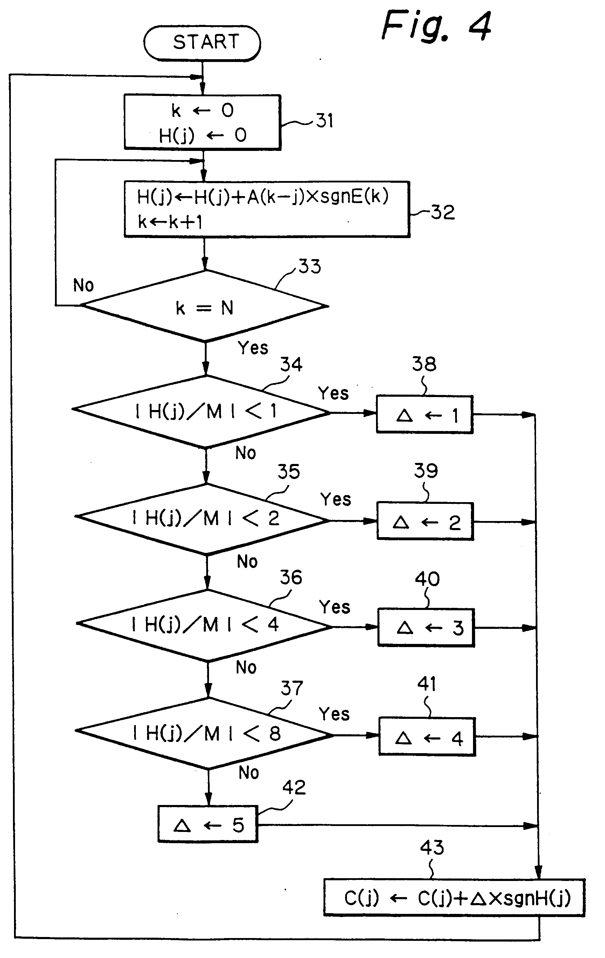

Hereinbelow, this method is called the variable step method. Fig. 4 shows this method in the form of a flow chart. In Fig. 4, reference numeral 31 denotes a clearing step for clearing k and H(j) to zero. Next, step 32 calculates estimation value H(j) of an error. Then the value of k is incremented by +1. Step 33 decides whether (k = N) or not, and calculates estimation values N times. After addition is done N times, steps of decision 34, 35, 36 and 37 are executed successively. These steps of decision 34 to 37 are those referred to above. When results of such decision are affirmative, the value $\Delta$ is set to 1, 2, 3 and 4, respectively (steps 38, 39, 40 and 41). When all of the results of the decision are negative, control moves to step 42, and the value $\Delta$ is set to 5. Then in step 43, the coefficient C(j) is increased or decreased by the width of $\Delta$ determined in accordance with the polarity of the estimation value H(j).

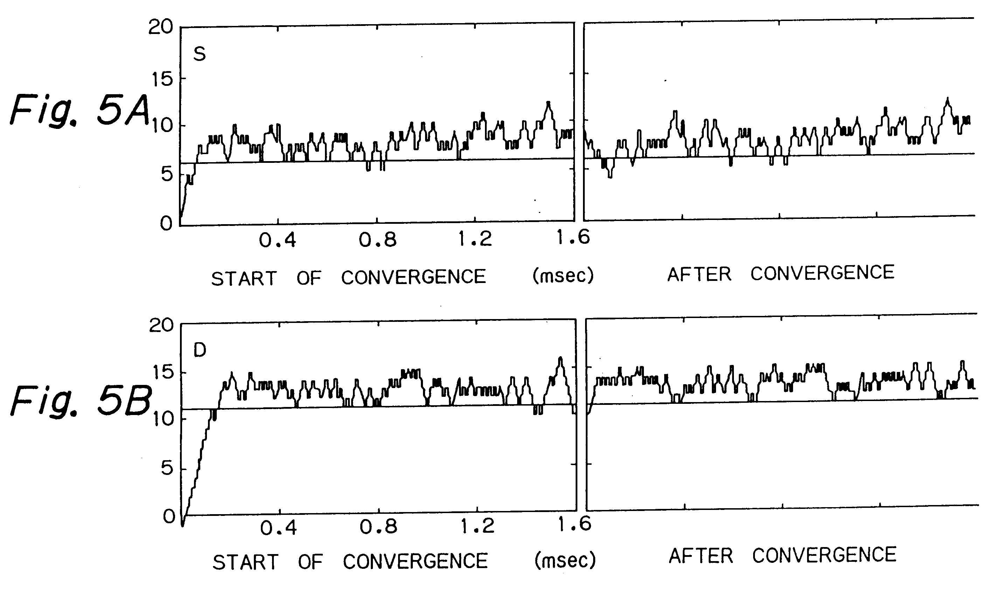

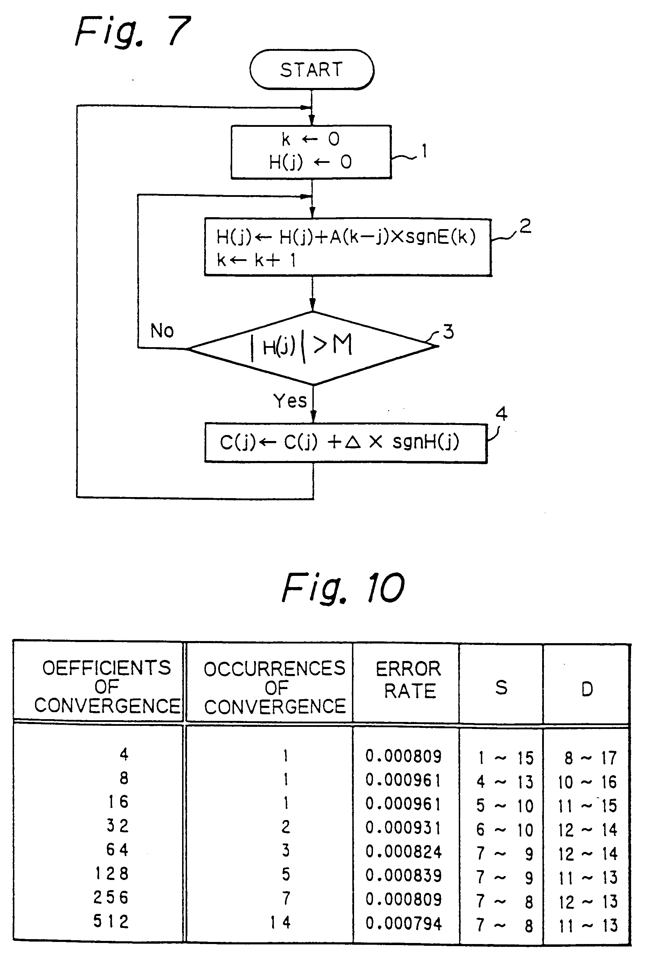

Fig. 5 shows an aspect of convergence of parameters S and D by the variable step method. Fig. 5 shows variation immediately after convergence and variation after convergence under (N = 400 and M = 32). Fig. 6 shows results of variation by changing N and fixing M to 32. This method certainly realizes fast convergence in the presence of numerous equalization errors, and decreases variation after sufficient convergence. However, it requires circuits (in case of hardware) or steps (in case of software) for varying $\Delta$ in response to the value of [H(j)/M] as many as the number of parameters, and therefore increases the scale of the entire circuit or the processing time by software.

An embodiment of the invention is explained below. Outline of the processing by the present invention is as follows:

1) The step $\Delta$ for changing a parameter is set.
2) The converging coefficient (M) is set in response to the S/N.
3) Estimation value H(j) of an equalization error is obtained by adding A(k - j) x sgn(Ek).
4) If the absolute value thereof is larger than the converging coefficient M, $\Delta$ in regard to a corresponding parameter is increased or decreased in accordance with the positive or negative sign.
5) Thereafter, H(j) is cleared, and the processing is repeated from 3).

A flow chart of the processing by an embodiment of the invention is shown in Fig. 7. The first step 1 clears k and the estimation value H(j) to zero. In the next step 2, a newly obtained estimation value is added to the estimation value H(j) of the equalization error E(k) already obtained. After this, k is incremented by +1. In the step 3 for decision, the absolute value of the calculated estimation value H(j) is compared with the converging coefficient M. If the absolute value is smaller than the converging coefficient M, the processing by step 2 and step 3 is repeated. Therefore, estimation values of equalization errors are accumulated. When the absolute value of the estimation value becomes larger than M, the corresponding parameter C(j) is increased or decreased by the fixed width of $\Delta$ in accordance with the polarity of the estimation value H(j) (step 4). Then the control returns to step 1 (step for clearing k and H(j)).

In this fashion, at least M occurrences of addition are performed. After sufficient convergence, it takes a long time for the estimation value H(j) to reach the converging coefficient M. As a result, significant occurrences of addition are executed. That is, although the step $\Delta$ is constant, the number of occurrences of addition N varies with amount of equalization errors. In addition, in case of increasing or decreasing the parameter with respect to quantized data as in this embodiment, a minimum step is determined by restriction of the bit length. However, in the method of increasing or decreasing the parameter in view of the absolute value of H(j), since the parameter maintains a value nearer to an optimum value for a long time after sufficient convergence, it has the merit that substantial resolution is smaller than Δ. The parameter automatic adjusting method according to the invention may be called a variable interval method.

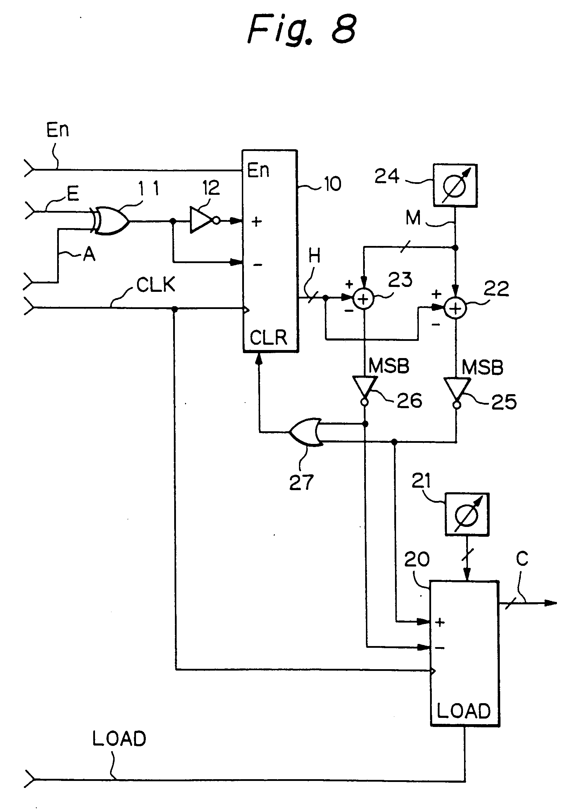

Fig. 8 shows a circuit arrangement for realizing the method of Fig. 7. The circuit includes two up/down counters 10 and 20. The counter 10 is used for obtaining an equalization error estimating function H. Its counting is controlled by an enable signal En, and it is cleared by entry of a clear signal CLR. Δ sign E of an equalization error and an identification result A from a bit identifier (it may be either an identifier of the integral detecting scheme or an identifier of the adaptive threshold value detecting scheme) are supplied to an EX-OR gate 11. If these bits supplied to the EX-OR gate 11 are equal, output of an inverter 12 represents the high level and permits the counter 10 to increment the counting. In contrast, if the input bits of the EX-OR gate 11 are different, output of the EX-OR gate 11 becomes the high level and permits the counter 10 to decrement the counting.

Output H of the counter 10 is supplied to an adder circuit 22 and a subtractor circuit 23, respectively. These circuits are fed with the converging coefficient M set by a switch 24. An MSB indicative of the polarity of the output from the adder circuit 22 and an MSB indicative of the polarity of the output from the subtracter circuit 23 are supplied to inverters 25 and 26, respectively. Outputs from the inverters 25 and 26 are used as signals for controlling the counting direction of the counter 20. The outputs from the inverters 25 and 26 are supplied also to an OR gate 27, and output from the OR gate 27 is supplied to the clear terminal of the counter 10.

The counter 20 sets the parameter C. After a preset value set by the switch 21 is read by a load signal, when the estimation value H or -H generated by the counter 10 becomes larger then the converging coefficient M set by the switch 24, the counter 20 increments or decrements the parameter C by one step in accordance with the sign (MSB) of the estimation value H. That is, if $E \times (2 \times A - 1) > 0$, H is incremented by 1. If it is negative, H is decremented by 1.

As compared to the existing variable step method, the circuit arrangement of Fig. 8 can omit an arrangement for varying the step of increasing or decreasing the parameter in view of the magnitude of the estimation value H. In addition, the present invention can omit also a counter for counting the number of occurrences of addition N. As a result, the circuit arrangement is simplified significantly. It is evident from comparison between the flow charts of Figs. 7 and 4 that the process for discriminating the number of occurrences of addition and the process for varying the step Δ by discriminating the magnitude of an estimation value are not required.

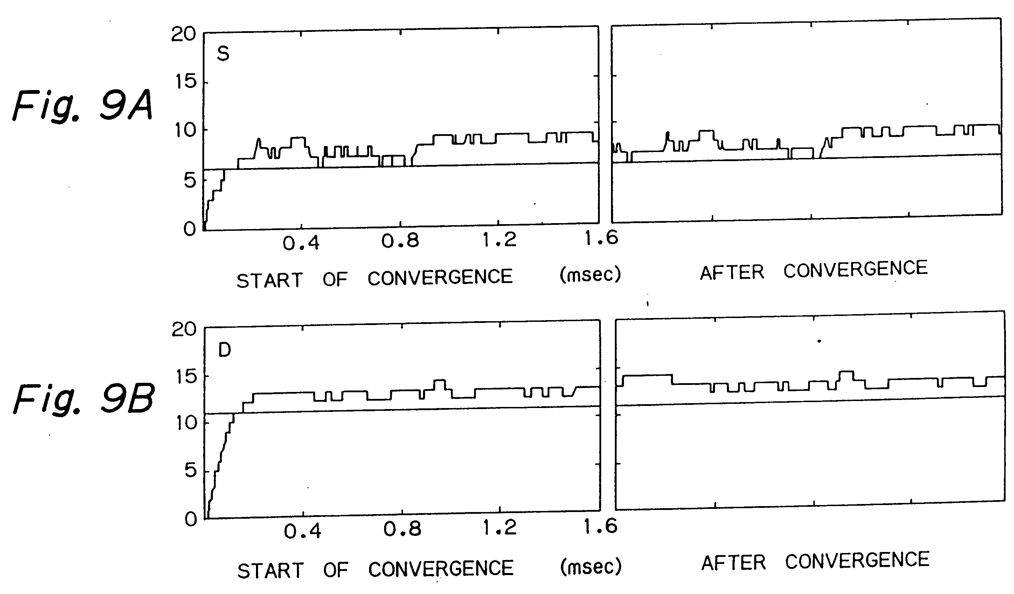

Fig. 9 shows an aspect of convergence of parameters in the variable interval method by the present invention. Results obtained by varying M from 4 to 512 are summarized in the table of Fig. 10. When Fig. 10 is compared with Fig. 5 showing convergence by the variable step method, it is noted that convergence is as fast as that of Fig. 5 and that variation after convergence is much smaller. As compared with Figs. 1 and 2 in which Δ is fixed, convergence is as early as N = 400 at the beginning, and values after convergence are as stable as N = 6400. As to sign errors, simple comparison is not possible because parameters are of different kinds. Nevertheless, it is known from comparison between Figs. 10 and 6 that the variable interval method according to the invention can decrease sign errors more.

According to the invention, the following effects can be obtained when compared with the existing parameter automatic adjusting method:

   1) A counter for counting the number of occurrences of addition N, and it is sufficient to set the converging coefficient M in response to the S/N.
   2) Since it is sufficient to use circuits only for comparing the magnitudes of the absolute value of the estimation value and the converging coefficient M in the same number as that of the parameters, the circuit arrangement is much simplified.
   3) Also when renewing parameters by operation based on A/D-converted data, since the period holding a parameter in a value near its optimum value is elongated, the invention gives the same results as increasing the number of bits.
   4) Parameters are renewed in appropriate intervals for respective parameters.

Therefore, the invention can realize faster and more stable convergence of parameters with a simpler circuit arrangement than those of the existent method.

## Claims

1.  A method for automatically adjusting parameters of an automatic equalizer which equalizes a signal reproduced in accordance with said parameters, comprising the steps of estimating a value of equalization error and modifying said estimated value of equalization error so as to obtain a modified estimated value, wherein said step of modifying said estimated value of equalization error modifies said estimated value by adding to said estimated value a product of a polarity of an equalization error and an identification value identified on the basis of the equalized signal, characterized by the steps of:

comparing an absolute value of said modified estimated value with a predetermined convergent coefficient; repeating said step of modifying when said absolute value of said modified estimated value is smaller than said convergent coefficient; varying one of said parameters of the automatic equalizer in accordance with a polarity of said modified estimated value when said absolute value of said modified estimated value is larger than said convergent coefficient, resetting said estimated value to zero before said estimated value is initially modified, and repeating said steps of resetting, modifying, comparing, repeating and varying for each one of said parameters of the automatic equalizer.

2. An automatic equalizer which equalizes a signal in accordance with parameters, the apparatus comprising:

means (10-12) for estimating a value of equalization error;
characterized in that it further comprises means (20-27) for continuously modifying the estimated value of equalization error when an absolute value of the modified estimated value is smaller than a convergent coefficient, wherein said means (20-27) for continuously modifying modifies said estimated value by adding to said estimated value a product of a polarity of an equalization error and an identification value identified on the basis of the equalized signal;
means (20-27) for varying a selected one of said parameters of the automatic equalizer in accordance with a polarity of said modified estimated value when said absolute value of said modified estimated value is larger than said convergent coefficient, and means for resetting said estimated value to zero before said estimated value is initially modified by said means (20-27) for continuously modifying.

3. The equalizer of claim 2, wherein the automatic equalizer which is to have its parameters adjusted is of the type which includes a transversal filter for equalizing the signal reproduced from a magnetic medium.

4. The equalizer of claim 2, wherein said one parameter is renewed in a zero forcing focusing algorithm.

5. The equalizer of claim 2, wherein said means (20-27) for continuously modifying comprises first means for determining a product of a polarity of an equalization error and an identification value identified on the basis of the equalized signal to produce a product output, means for incrementing said estimated value when the product output is a positive value and for decrementing said estimated value when the product output is a negative value to produce a modified estimated value, and second means for determining when said modified estimated value is greater than said convergent coefficient, and wherein said means (20-27) for varying comprises means for adding a predetermined value to said one parameter when said second means for determining determines that said modified estimated value is greater than the convergent coefficient.

6. The equalizer of claim 5, wherein said means (20-27) for continuously modifying further comprises means for resetting said estimated value when said second means for determining determines that said modified estimated value is greater than said convergent coefficient.

**Patentansprüche**

1. Verfahren zur automatischen Einstellung von Parametern eines automatischen Entzerrers, der ein wiedergegebenes Signal in Übereinstimmung mit den genannten Parametern entzerrt, umfassend die Schritte des Abschätzens eines Wertes eines Entzerrungsfehlers und des Modifizierens des genannten Schätzwertes des Entzerrungsfehlers, derart, dass ein modifizierter Schätzwert erhalten wird, wobei der genannte Schritt des Modifizierens des genannten Schätzwertes des Entzerrungsfehlers den betreffenden Schätzwert dadurch modifiziert, dass zu dem betreffenden Schätzwert ein Produkt aus einer Polarität eines Entzerrungsfehlers und eines Identifikationswertes hinzuaddiert wird, der auf der Basis des entzerrten Signals identifiziert ist,
**gekennzeichnet** durch die Schritte:

Vergleichen eines Absolutwertes des genannten modifizierten Schätzwertes mit einem bestimmten Konvergenzkoeffizienten, Wiederholen des Modifizierungsschrittes, wenn der Absolutwert des genannten modifizierten Schätzwertes kleiner ist als der genannte Konvergenzkoeffizient,
Variieren eines der genannten Parameter des automatischen Entzerrers in Übereinstimmung mit einer Polarität des genannten modifizierten Schätzwertes, wenn der Absolutwert des genannten modifizierten Schätzwertes größer ist als der genannte Konvergenzkoeffizient,
Rücksetzen des genannten Schätzwertes auf Null, bevor der betreffende Schätzwert anfänglich modifiziert wird,

und Wiederholen der genannten Schritte des Rücksetzens, Modifizierens, Vergleichens, Wiederholens und Variierens für jeden Parameter der genannten Parameter des automatischen Entzerrers.

2. Automatischer Entzerrer, der ein Signal in Übereinstimmung mit Parametern entzerrt, mit einer Einrichtung (10-12) zur Abschätzung eines Wertes eines Entzerrungsfehlers, **dadurch gekennzeichnet**, dass er ferner eine Einrichtung (20-27) aufweist zur kontinuierlichen Modifizierung des Schätzwertes des Entzerrungsfehlers, wenn ein Absolutwert des modifizierten Schätzwertes kleiner ist als ein Konvergenzkoeffizient,

dass die genannte Einrichtung (20-27) zur kontinuierlichen Modifizierung den genannten Schätzwert dadurch modifiziert, dass zu dem betreffenden Schätzwert ein Produkt aus einer Polarität eines Entzerrungsfehlers und eines Identifikationswertes hinzuaddiert wird, der auf der Basis des entzerrten Signals identifiziert ist, dass eine Einrichtung (20-27) vorgesehen ist zum Variieren eines ausgewählten Parameters der genannten Parameter des automatischen Entzerrers in Übereinstimmung mit einer Polarität des genannten modifizierten Schätzwertes, wenn der Absolutwert des genannten modifizierten Schätzwerts größer ist als der genannte Konvergenzkoeffizient, und dass eine Einrichtung vorgesehen ist zum Zurücksetzen des genannten Schätzwertes auf Null, bevor der betreffende Schätzwert durch die genannte Einrichtung (20-27) zur kontinuierlichen Modifizierung anfänglich modifiziert wird.

3. Entzerrer nach Anspruch 2, wobei der automatische Entzerrer, dessen Parameter eingestellt werden müssen, ein Entzerrer des Typs ist, der ein Transversalfilter zur Entzerrung des von einem magnetischen Aufzeichnungsträger wiedergegebenen Signals enthält.

4. Entzerrer nach Anspruch 2, wobei der genannte eine Parameter in einem zu Null führenden Fokussierungs-Algorithmus erneuert wird.

5. Entzerrer nach Anspruch 2, wobei die genannte Einrichtung (20-27) zur kontinuierlichen Modifizierung eine erste Einrichtung zur Bestimmung eines Produkts aus einer Polarität eines Entzerrungsfehlers und eines Identifikationswertes, der auf der Basis des entzerrten Signals identifiziert ist, um ein Produktausgangssignal zu erzeugen, eine Einrichtung zum Inkrementieren des genannten Schätzwertes in dem Fall, dass das Produkt-Ausgangssignal ein positiver Wert ist, und zum Dekrementieren des betreffenden Schätzwertes, wenn das Produkt-Ausgangssignal ein negativer Wert ist, um einen modifizierten Schätzwert zu erzeugen, und eine zweite Einrichtung aufweist zur Bestimmung, wenn der genannte modifizierte Schätzwert größer ist als der genannte Konvergenzkoeffizient, und wobei die genannte Einrichtung (20-27) zum Variieren eine Einrichtung umfaßt zum Addieren eines bestimmten Wertes zu dem genannten einen Parameter, wenn die genannte zweite Einrichtung zur Bestimmung bestimmt, dass der genannte modifizierte Schätzwert größer ist als der Konvergenzkoeffizient.

6. Entzerrer nach Anspruch 5, wobei die genannte Einrichtung (20-27) zur kontinuierlichen Modifizierung ferner eine Einrichtung aufweist zum Zurücksetzen des genannten Schätzwertes, wenn die genannte zweite Einrichtung zur Bestimmung bestimmt, dass der genannte modifizierte Schätzwert größer ist als der genannte Konvergenzkoeffizient.

**Revendications**

1. Procédé destiné à ajuster de façon automatique des paramètres d'un égaliseur automatique qui égalise un signal reproduit conformément auxdits paramètres, comprenant les étapes consistant à estimer une valeur d'erreur d'égalisation et à modifier ladite valeur estimée d'erreur d'égalisation de façon à obtenir une valeur estimée modifiée, dans lequel ladite étape de modification de ladite valeur estimée d'erreur d'égalisation modifie ladite valeur estimée en ajoutant à ladite valeur estimée un produit d'une polarité d'une erreur d'égalisation et une valeur d'identification identifiée sur la base du signal égalisé, caractérisé par les étapes consistant à :

comparer une valeur absolue de ladite valeur estimée modifiée à un coefficient convergent prédéterminé, répéter ladite étape de modification lorsque ladite valeur absolue de ladite valeur estimée modifiée est plus petite que ledit coefficient convergent, faire varier l'un desdits paramètres de l'égaliseur automatique conformément à une polarité de ladite valeur estimée modifiée lorsque ladite valeur absolue de ladite valeur estimée modifiée est plus grande que ledit coefficient convergent, réinitialiser ladite valeur estimée à zéro avant que ladite valeur estimée ne soit initialement modifiée, et répéter lesdites étapes consistant à réinitialiser, modifier,

comparer, répéter et faire varier pour chacun desdits paramètres de l'égaliseur automatique.

2. Egaliseur automatique qui égalise un signal conformément à des paramètres, le dispositif comprenant :

un moyen (10 à 12) destiné à estimer une valeur d'erreur d'égalisation, caractérisé en ce qu'il comprend en outre un moyen (20 à 27) destiné à modifier en permanence la valeur estimée d'erreur d'égalisation lorsqu'une valeur absolue de la valeur estimée modifiée est plus petite qu'un coefficient convergent, dans lequel ledit moyen (20 à 27) de modification en permanence modifie ladite valeur estimée en ajoutant à ladite valeur estimée un produit d'une polarité d'une erreur d'égalisation et une valeur d'identification identifiée sur la base du signal égalisé, un moyen (20 à 27) destiné à faire varier un paramètre sélectionné parmi lesdits paramètres de l'égaliseur automatique conformément à une polarité de ladite valeur estimée modifiée lorsque ladite valeur absolue de ladite valeur estimée modifiée est plus grande que ledit coefficient convergent, et un moyen destiné à réinitialiser ladite valeur estimée à zéro avant que ladite valeur estimée ne soit initialement modifiée par ledit moyen (20 à 27) de modification en permanence.

3. Egaliseur selon la revendication 2, dans lequel l'égaliseur automatique dont les paramètres doivent être ajustés est du type qui comprend un filtre transversal destiné à égaliser le signal reproduit à partir d'un support magnétique.

4. Egaliseur selon la revendication 2, dans lequel ledit un paramètre est renouvelé dans un algorithme de focalisation à forçage à zéro.

5. Egaliseur selon la revendication 2, dans lequel ledit moyen (20 à 27) de modification en permanence comprend un premier moyen destiné à déterminer un produit d'une polarité d'une erreur d'égalisation et une valeur d'identification identifiée sur la base du signal égalisé en vue de produire une sortie d'un produit, un moyen destiné à incrémenter ladite valeur estimée lorsque la sortie du produit est une valeur positive et destiné à décrémenter ladite valeur estimée lorsque la sortie du produit est une valeur négative en vue de produire une valeur estimée modifiée, et un second moyen destiné à déterminer lorsque ladite valeur estimée modifiée est supérieure audit coefficient convergent, et dans lequel ledit moyen (20 à 27) de variation comprend un moyen destiné à additionner une valeur prédéterminée audit un paramètre lorsque ledit second moyen de détermination détermine que ladite valeur estimée modifiée est supérieure au coefficient convergent.

6. Egaliseur selon la revendication 5, dans lequel ledit moyen (20 à 27) de modification en permanence comprend en outre un moyen destiné à réinitialiser ladite valeur estimée lorsque ledit second moyen de détermination détermine que ladite valeur estimée modifiée est supérieure audit coefficient convergent.

Fig. 1A

S

START OF CONVERGENCE (msec)    AFTER CONVERGENCE

Fig. 1B

D

START OF CONVERGENCE (msec)    AFTER CONVERGENCE

EP 0 539 276 B1

*Fig. 2A*

*Fig. 2B*

## Fig. 3

| OCCURRENCES OF ADDITION | OCCURRENCES OF CONVERGENCE | ERROR RATE | S | D |
|---|---|---|---|---|
| 100 | 1 | 0.001038 | 4 ~ 13 | 9 ~ 16 |
| 200 | 3 | 0.001038 | 4 ~ 11 | 10 ~ 16 |
| 400 | 3 | 0.000885 | 4 ~ 11 | 10 ~ 15 |
| 800 | 5 | 0.000977 | 6 ~ 11 | 11 ~ 15 |
| 1600 | 5 | 0.000855 | 5 ~ 10 | 12 ~ 15 |
| 3200 | 10 | 0.000931 | 6 ~ 9 | 12 ~ 15 |
| 6400 | 20 | 0.000778 | 7 ~ 9 | 12 ~ 14 |
| 12800 | 37 | 0.000824 | 8 ~ 9 | 12 ~ 13 |

## Fig. 6

| OCCURRENCES OF ADDITION | OCCURRENCES OF CONVERGENCE | ERROR RATE | S | D |
|---|---|---|---|---|
| 100 | 1 | 0.001129 | 4 ~ 13 | 9 ~ 17 |
| 200 | 2 | 0.001083 | 5 ~ 11 | 10 ~ 16 |
| 400 | 1 | 0.000930 | 4 ~ 11 | 10 ~ 15 |
| 800 | 3 | 0.001053 | 5 ~ 11 | 10 ~ 15 |
| 1600 | 2 | 0.001190 | 5 ~ 10 | 11 ~ 15 |
| 3200 | 2 | 0.001297 | 5 ~ 10 | 11 ~ 15 |
| 6400 | 4 | 0.001480 | 4 ~ 10 | 10 ~ 16 |
| 12800 | 4 | 0.001617 | 5 ~ 11 | 10 ~ 16 |

*Fig. 4*

```
                    ┌─────────────┐
                    │    START    │
                    └──────┬──────┘
                           │
              ┌────────────▼────────────┐
              │      k ← 0              │──── 31
              │      H(j) ← 0           │
              └────────────┬────────────┘
                           │
              ┌────────────▼────────────────┐
              │  H(j)←H(j)+A(k−j)×sgnE(k)    │──── 32
              │  k←k+1                       │
              └────────────┬────────────────┘
                           │
        No          ┌──────▼──────┐  33
        ◄───────────┤   k = N     │
                    └──────┬──────┘
                           │ Yes
                      34   │
                    ┌──────▼──────┐   Yes      ┌──────────┐  38
                    │ │H(j)/M│ < 1 ├──────────►│  △ ← 1   │────┐
                    └──────┬──────┘            └──────────┘    │
                           │ No                                │
                      35   │                                   │
                    ┌──────▼──────┐   Yes      ┌──────────┐  39│
                    │ │H(j)/M│ < 2 ├──────────►│  △ ← 2   │────┤
                    └──────┬──────┘            └──────────┘    │
                           │ No                                │
                      36   │                                   │
                    ┌──────▼──────┐   Yes      ┌──────────┐  40│
                    │ │H(j)/M│ < 4 ├──────────►│  △ ← 3   │────┤
                    └──────┬──────┘            └──────────┘    │
                           │ No                                │
                      37   │                                   │
                    ┌──────▼──────┐   Yes      ┌──────────┐  41│
                    │ │H(j)/M│ < 8 ├──────────►│  △ ← 4   │────┤
                    └──────┬──────┘            └──────────┘    │
                           │ No                                │
                    ┌──────▼──────┐  42                        │
                    │   △ ← 5     │────────────────────────────┤
                    └─────────────┘                            │
                                                          43   │
                                   ┌───────────────────────────▼────────┐
                                   │  C(j) ← C(j)+△×sgnH(j)             │
                                   └────────────────────────────────────┘
```

Fig. 5A

START OF CONVERGENCE          (msec)          AFTER CONVERGENCE

Fig. 5B

START OF CONVERGENCE          (msec)          AFTER CONVERGENCE

EP 0 539 276 B1

## Fig. 7

Flowchart:

START

1. k ← 0
   H(j) ← 0

2. H(j) ← H(j)+A(k−j)×sgnE(k)
   k ← k+ 1

3. |H(j)| > M   — No / Yes

4. C(j) ← C(j) + △ × sgnH(j)

## Fig. 10

| OEFFICIENTS OF CONVERGENCE | OCCURRENCES OF CONVERGENCE | ERROR RATE | S | D |
|---|---|---|---|---|
| 4 | 1 | 0.000809 | 1 ~ 15 | 8 ~ 17 |
| 8 | 1 | 0.000961 | 4 ~ 13 | 10 ~ 16 |
| 16 | 1 | 0.000961 | 5 ~ 10 | 11 ~ 15 |
| 32 | 2 | 0.000931 | 6 ~ 10 | 12 ~ 14 |
| 64 | 3 | 0.000824 | 7 ~ 9 | 12 ~ 14 |
| 128 | 5 | 0.000839 | 7 ~ 9 | 11 ~ 13 |
| 256 | 7 | 0.000809 | 7 ~ 8 | 12 ~ 13 |
| 512 | 14 | 0.000794 | 7 ~ 8 | 11 ~ 13 |

# Fig. 8

Fig. 9A

START OF CONVERGENCE      (msec)          AFTER  CONVERGENCE

Fig. 9B

START OF CONVERGENCE      (msec)          AFTER  CONVERGENCE

EP 0 539 276 B1